# EUROPEAN PATENT APPLICATION

(11) **EP 2 204 565 A1**
(43) Date of publication of application: **07.07.2010**
(21) Application number: 09015614.2
(22) Date of filing: 17.12.2009
(51) Int. Cl.: F02D 41/00, F02D 41/02, H02P 9/00

(54) **Engine generator set control**

(30) Priority: 31.12.2008 US 141992 P; 09.12.2009 US 633868
(71) Applicant: Caterpillar, Inc., Peoria, IL 61629-9510 (US)
(72) Inventor: Griffin, Jeffery L., Peoria, IL 61629-9510 (US)
(74) Representative: Preuss, Udo

(57) **Abstract**

An engine generator set control system includes an engine, a generator, a frequency selection interface, a voltage regulator, and a controller. The engine includes a variable geometry turbocharger (VGT) and a crankshaft. The controller generates a signal indicative of a desired VGT configuration as a function of the selected frequency.

## Description

### Technical Field

This disclosure relates generally to power generation and distribution systems and, particularly, to a generator set frequency control.

### Background

Engine generator sets are used to produce electric power to power electric loads in a variety of applications and locations. A generator and an engine are mounted together along with other accessories on an anchor platform to form an integral unit commonly termed a genset. As fuel is burned within the engine, a mechanical rotation is created that drives the generator to produce AC electrical power. The frequency of the AC power produced is a direct result of the engine speed and number of rotors on the generator shaft.

Different locations may have different frequency and voltage requirements. For instance, European installations generally require a frequency 50Hertz, and a voltage of 200V or 400V; while United States installations generally require a frequency of 60 Hertz and a voltage of 240V or 480V. Genset manufacturers and distributors desire that gensets be capable of operating at any frequency or voltage rating a customer may require with a minimum of adaptation.

Recently electronics have been developed to electronically change the engine rating and generator voltage through a customer selection interface. For example, U.S. Patent No. 6,710,467 issued to Braun et al., discloses a method and apparatus for changing the rating of an engine generator set by selecting a generator set rating using a rating selector included in the generator set control system. The generator set rating includes at least an engine rating and voltage.

Engines typically include a turbocharger. A turbocharger that is efficient at one engine speed may not be efficient at another engine speed. When a genset frequency is changed, and thus the engine speed, the turbocharger may not be sized for the alternative frequency. This may result in the engine not receiving the optimum amount of air or in inefficiencies in turbocharger operation. Often a genset manufacturer will either oversize the turbocharger to allow the engine to operate at different speeds, or will recommend that different size turbochargers be used when the genset is operating at different frequencies.

Variable geometry turbochargers have been developed which use adjustable vanes, nozzles, or the like, to control across a turbine. For examples, the exhaust flow may be adjusted at the inlet of a turbine through moving vanes to different positions to vary the angle and flow of air as the air hits the turbine blades.

It is desirable to have a genset frequency selection that includes optimization of the turbocharger.

### Summary of the Invention

An engine generator set (genset) control system is disclosed. The control system includes an engine, a generator, a frequency selection interface, a voltage regulator, and a controller. The engine includes a variable geometry turbocharger (VGT) and a crankshaft. The generator is mechanically coupled to the crankshaft. The voltage regulator controls the generator voltage as a function of a selected frequency. The controller generates a signal indicative of a desired VGT configuration as a function of the selected frequency.

A genset control method is also disclosed. The control method includes selecting a frequency, configuring a VGT as a function of the selected frequency, controlling an engine speed as a function of the selected frequency, and controlling a generator voltage as a function of the selected frequency.

### Brief Description of the Drawings

Figure 1 illustrates a genset control system.
Figure 2 illustrates a genset control method.

### Detailed Description

Reference will now be made in detail to specific embodiments or features, examples of which are illustrated in the accompanying drawings. Generally, corresponding reference numbers will be used throughout the drawings to refer to the same or corresponding parts.

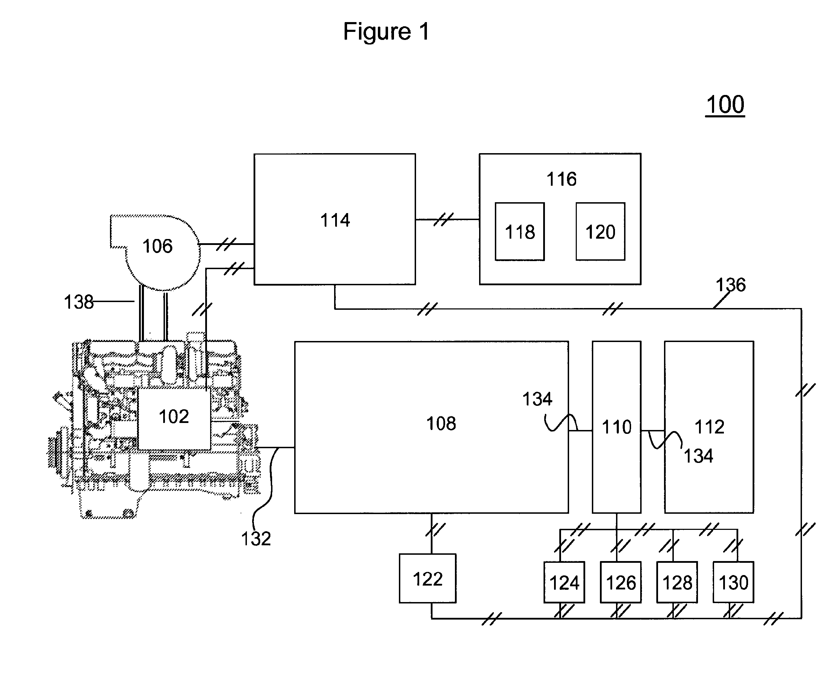

Referring to Figure 1, an exemplary embodiment of a genset control system 100 is illustrated. The genset control system 100 may include and engine 102, a generator 108, a circuit breaker 110, a controller 114, a frequency selection interface 116, a voltage regulator 122, and protective relays 124, 126, 128, and 130. The genset control system 100 may be electrically coupled to an electric load 112.

For the purpose of this description, electrically coupled means that one member is connected to another member such that electric power flows from that one member to the other. For example, cables may electrically connect a load 112 to a power source. The connection may also be through a busbar, a circuit breaker 110, or any other electric connector that may be known to an ordinary person skilled in the art now or in the future.

The engine 102 may be an internal combustion engine. The engine 102 may include a variable geometry turbocharger (VGT) 106 and a crankshaft 132. The engine 102 may have a speed.

The VGT may include any turbocharger equipped with one or more devices which may direct and/or control the exhaust flow from the engine 102 onto the turbine blades. In one non-limiting example the devices include aerodynamically-shaped movable vanes in turbine housing near a turbine inlet which may direct exhaust flow from the engine 102 onto the turbine blades. The vane angles may be adjusted via an actuator. A desired angle of the vanes may vary throughout the engine 102 RPM range to optimize turbine behavior and airflow to the engine. The devices may include any one or more devices that would be known by an ordinary person skilled in the art now or in the future that may direct and/or control the exhaust flow from the engine 102 onto the turbine blades. An example of a variable geometry turbo charger may be found in U.S. Patent No. 7,426,829 issued to Christopher Greentree. The VGT 106 may be configurable by moving the devices to different positions to optimize turbine behavior.

The VGT 106 may be coupled to the engine 102 air intake manifold to provide pressurized air to the engine 102 through air ducts 138. The VGT 106 may be coupled to the engine 102 exhaust manifold through air ducts 138 in such a way that exhaust gases from engine 102 power the turbines in the VGT 106.

The engine 102 may burn fuel to produce rotational motion in a crankshaft 132. The engine 102 speed may be the rotational speed of the crankshaft 132. The crankshaft 132 may be mechanically coupled to the generator 108.

Generator 106 may include any of a variety of electromechanical devices that convert mechanical power into electrical power, typically via Faraday induction effects between moving and stationary current-carrying coils and /or magnets. Generator may include an AC asynchronous brushless generator.

Voltage regulator 122 may control the voltage of power generator 106 produces. Voltage regulator 122 may include an electronic circuit or device that maintains the terminal voltage of generator 106 within required limits despite variations in input voltage or load. A user may set a desired voltage through voltage regulator 122. Voltage regulator 122 may control generator 106 voltage as a function of a desired frequency. When a load is increased during a short period of time, the frequency may droop. Voltage regulator 122 may sense the droop and drop the voltage level for a short time to allow the frequency level to recover. This type of voltage regulator 122 control would be well known to an ordinary person skilled in the art.

Generator 106 may be electrically connected to the load 112 through the circuit breaker 110. Circuit breaker 110 may be any device that makes and breaks the contact between its input and output terminals. Circuit breaker 110 may be capable of clearing fault currents as well as load currents. Circuit breaker 110 may be electronically connected to power protection relays 124, 126, 128, and 130. When power protection relays 124, 126, 128, and 130 sense a power fault, they may generate a signal such that circuit breaker 110 disconnects generator 106 from load 112.

Power protection relays 124, 126, 128, and 130 may include an overfrequency relay 124, an underfrequency relay 126, an overvoltage relay 128, and an undervoltage relay 130.

Overfrequency relay 124 may include any device that monitors the frequency level of an electrical power system and determines if the frequency level is above a specific value. When the frequency level is above the specific value, the relay 124 may initiate a trip signal intended to open circuit breaker 110 or other protective devices.

Underfrequency relay 126 may include any device that monitors the frequency level of an electrical power system and determines if the frequency level is below a specific value. When the frequency level is below the specific value, the relay 126 may initiate a trip signal intended to open circuit breaker 110 or other protective devices.

Overvoltage relay 128 may include any device that monitors the voltage level of an electrical power system and determines if the voltage level is above a specific value. When the voltage level is over the specific value, the relay 128 may initiate a trip signal intended to open circuit breaker 110 or other protective devices.

Undervoltage relay 130 may include any device that monitors the voltage level of an electrical power system and determines if the voltage level is below a specific value. When the voltage level is below the specific value, the relay 130 may initiate a trip signal intended to open circuit breaker 110 or other protective devices.

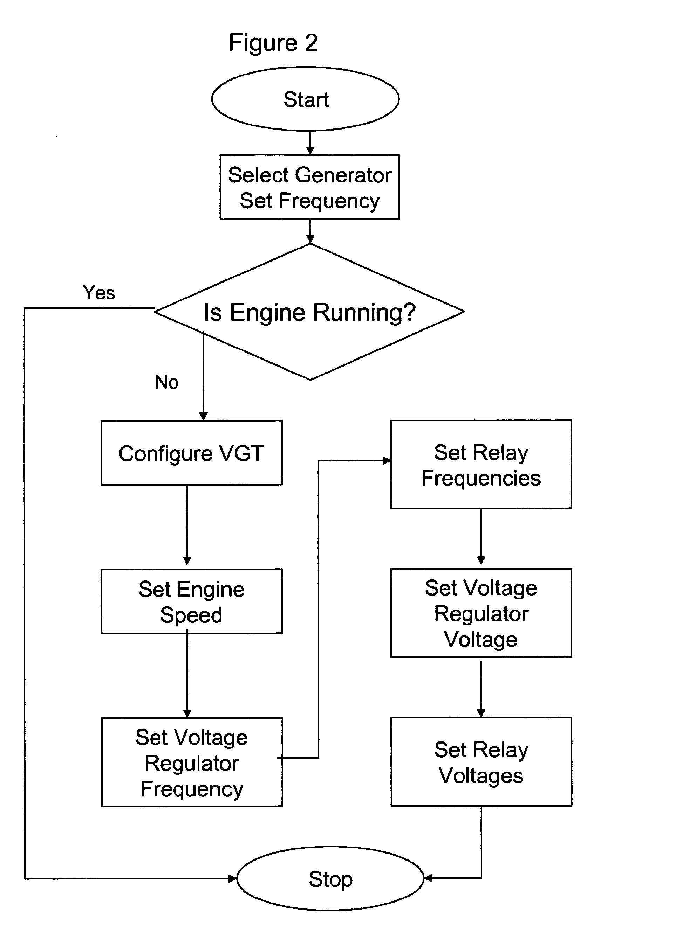

The controller 114 may include a processor (not shown) and a memory component (not shown). The processor may be microprocessors or other processors as known in the art. In some embodiments the processor may be made up of multiple processors. The processor may execute instructions for generating a signal indicative of a desired configuration of the VGT 106 as the function of a selected frequency; and generate a signal indicative of a desired engine 102 speed as a function of the selected frequency. Examples of these methods are described below in connection with Figure 2. Such instructions may be read into or incorporated into a computer readable medium, such as the memory component or provided external to processor. In alternative embodiments, hard-wired circuitry may be used in place of or in combination with software instructions to implement a steering method. Thus embodiments are not limited to any specific combination of hardware circuitry and software.

The term "computer-readable medium" as used herein refers to any medium or combination of media that participates in providing instructions to processor for execution. Such a medium may take many forms, including but not limited to, non-volatile media, volatile media, and transmission media. Non-volatile media includes, for example, optical or magnetic disks. Volatile media includes dynamic memory. Transmission media includes coaxial cables, copper wire and fiber optics, and can also take the form of acoustic or light waves, such as those generated during radio-wave and infra-red data communications.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer or processor can read.

The memory component may include any form of computer-readable media as described above. The memory component may include multiple memory components.

In the illustrated embodiment, the controller 114 is enclosed in a single housing. In an alternative embodiment, the controller 114 may include a plurality of components operably connected and enclosed in a plurality of housings. The controller 114 may be located on the genset or on-board the engine 102. In another embodiment, the controller 114 may be located on the generator 106. In still other embodiments the controller may be located in a plurality of operably connected locations including on-board the engine 102, on-board the generator 106, and remotely.

The frequency selection interface (FSI) 116 may include any device that an operator, technician, or other person may operate to select a desired frequency for the genset control system 100. The FSI 116 may be located on a control panel mounted on the genset. In an alternative embodiment the FSI 116 may be located remotely from the genset. The FSI may include devices with which the operator, technician, or other person interacts physically or they may include voice activation devices.

The FSI 116 may include a frequency switch 118. The frequency switch 118 may be operable to select a desired frequency. A switch includes any device, mechanism, or apparatus moveable between two or more positions. Non-limiting examples of a switch include a button, a depressible display area, a slideable member, and a rotatable member. In alternative embodiments, the frequency switch 118 may include a scrolling display with a selection device. The frequency switch 118 may include any device known by an ordinary person skilled in the art now or in the future to select a desired frequency.

The desired frequency may have one or more voltages related to it. For example, 50 Hertz may be related to 200V or 400V. 60 Hertz may be related to 240V or 480V. The FSI may include a voltage switch 120. The voltage switch 120 may be operable to select a desired voltage related to the selected frequency. In alternative embodiments, the voltage switch 120 may include a scrolling display with a selection device. The voltage switch 120 may include any device known by an ordinary person skilled in the art now or in the future to select a desired voltage.

The FSI 116 may be coupled to the controller 114 in such a way as to communicate to the controller 114 the selected frequency and the selected voltage. The FSI may be coupled to the voltage regulator 122 in such a way as to communicate to the voltage regulator 122 the selected frequency and the selected voltage. The FSI 116 may be coupled to the overfrequency relay 124 in such a way as to communicate to overfrequency relay 124 the selected frequency. The FSI 116 may be coupled to the underfrequency relay 126 in such a way as to communicate to underfrequency relay 126 the selected frequency. The FSI may be coupled to the overvoltage relay 128 in such a way as to communicate to the overvoltage relay 128 the selected voltage. The FSI may be coupled to the undervoltage relay 130 in such a way as to communicate to the undervoltage relay 130 the selected voltage.

Referring now to Figure 3, an exemplary genset control method is illustrated. The method includes selecting a frequency, configuring a VGT 106 as a function of the selected frequency, and controlling a generator 106 voltage as a function of the selected frequency.

An operator, technician, or other person may select a desired frequency on the FSI 116, by using the frequency switch 118. The desired frequency may have a related voltage. The person may select the related voltage with the voltage switch 120. The FSI 116 may generate a signal indicative of the desired frequency and related voltage, and send the signal to one or more of the controller 114, voltage regulator 122, and protective relays 124, 126, 128, 130, if the engine 102 is not running. If the engine 102 is running, the FSI 116 may not send the signal. In alternative embodiments, the FSI 116 may always send the signal but the controller 114, voltage regulator 122, and protective relays 124, 126, 128, 130, may be able to distinguish that the engine 102 is running and not implement any logic based on the signal.

If the engine 102 is not running, the controller 114 may implement logic to determine a desired configuration of the VGT 106. The controller 114 may generate a signal indicative of the desired position of the VGT 106. An actuator may then move parts within the VGT 106 to the desired configuration.

The controller 114 may set the engine 102 to a rating that will produce the correct engine 102 speed to produce the desired frequency.

The FSI 116 may communicate directly or through the controller 114, the desired frequency and related voltage to the voltage regulator 122.

The FSI 116 may communicate directly of through the controller 114 the desired frequency and related voltage to the protective relays 124, 126, 128, 130.

### Industrial Applicability

The above described genset control system 100 and method may be used to configure a genset to operate in a variety of applications in different locations. A technician may select a desired frequency, and the FSI 116 and the controller 114 will set the engine 102 speed, the voltage regulator 122 settings, the protective relay 124, 126, 128, 130 settings, and the VGT 106 configuration automatically. This allows a manufacturer to use the same turbocharger for different ratings.

From the foregoing it will be appreciated that, although specific embodiments have been described herein for purposes of illustration, various modifications or variations may be made without deviating from the spirit or scope of inventive features claimed herein. Other embodiments will be apparent to those skilled in the art from consideration of the specification and figures and practice of the arrangements disclosed herein. It is intended that the specification and disclosed examples be considered as exemplary only, with a true inventive scope and spirit being indicated by the following claims and their equivalents.

## Claims

1. An engine generator set control system, comprising:
an engine including a variable geometry turbocharger and a crankshaft,
generator mechanically coupled to the crankshaft,
a frequency selection interface configured to generate a signal indicative of a selected frequency,
a voltage regulator configured to control the voltage output of the generator as a function of the selected frequency, and
a controller configured to generate a signal indicative of a desired configuration of the variable geometry turbocharger as a function of the selected frequency and generate a signal indicative of a desired engine speed as a function of the selected frequency.

2. The engine generator set control system of claim 1, further comprising:
a circuit breaker electrically connected to the generator, and
an overfrequency relay configured to control the circuit breaker as a function of the selected frequency.

3. The engine generator set control system of claim 1, further comprising:
a circuit breaker electrically connected to the generator, and
an underfrequency relay configured to control the circuit breaker as a function of the selected frequency.

4. The engine generator set control system of claim 1, wherein the selected frequency includes a related voltage, and
further comprising:
a circuit breaker electrically connected to the generator, and
an overvoltage relay configured to control the circuit breaker as a function of the related voltage.

5. The engine generator set control system of claim 1, wherein the selected frequency includes a related voltage, and
further comprising:
a circuit breaker electrically connected to the generator, and
an undervoltage relay configured to control the circuit breaker as a function of the related voltage.

6. The engine generator set control system of claim 1, wherein the selected frequency includes a related voltage, and the voltage regulator is configured to control the voltage output of the generator as a function of the related voltage.

7. A engine generator set control method, comprising:
selecting a frequency,
configuring a variable geometry turbocharger as a function of the selected frequency,
controlling an engine speed as a function of the selected frequency, and
controlling a generator voltage as a function of the selected frequency.

8. The engine generator set control method of claim 7, further comprising controlling a circuit breaker as a function of the selected frequency.

9. The engine generator set control method of claim 7, wherein the selected frequency has a related voltage, and
further comprising controlling a generator voltage as a function of the related voltage.

10. The engine generator set control method of claim 7, wherein the selected frequency has a related voltage, and
further comprising controlling a circuit breaker as a function of the related voltage.
